# EUROPÄISCHE PATENTANMELDUNG

(11) **EP 4 173 801 A1**
(43) Veröffentlichungstag der Anmeldung: **03.05.2023**
(21) Anmeldenummer: 21204925.8
(22) Anmeldetag: 27.10.2021
(51) Int. Cl.: B29C 64/10, B33Y 30/00, C08K 3/08, B33Y 70/00, B33Y 80/00, C08K 5/00, C08K 7/00, C08K 3/22

(54) **METALLGEFÜLLTE HARZFORMULIERUNG, 3D-DRUCKVERFAHREN UND ADDITIV GEFERTIGTES BAUTEIL**

(71) Anmelder: Siemens Healthcare GmbH, 91052 Erlangen (DE); Cubicure GmbH, 1230 Wien (AT)
(72) Erfinder: OTT, Michael, 92676 Speinshart (DE); WIRTH, Stefan, 91056 Erlangen (DE); DINKEL, Nick, 91301 Forchheim (DE); HÄUPL, Rainer, 92703 Krummennaab (DE); WREGE, 91056 Erlangen (DE); GRASRUCK, Michael, 90542 Eckental Forth (DE); GORSCHE, Christian, 1140 Wien (AT); GMEINER, Robert, 1050 Wien (AT); MORGANTI, Elena, 1150 Wien (AT); SEIDLER, Konstanze, 1150 Wien (AT)
(74) Vertreter: Isarpatent

(57) **Zusammenfassung**

Die vorliegende Erfindung betrifft eine metallgefüllte Harzformulierung, insbesondere für ein 3D-Druckverfahren, auf der Basis von schichtweiser Photopolymerisation zur Fertigung eines Bauteils, wobei die Harzformulierung eine photopolymerisierbare Matrixkomponente und einen dichten metallischen Füllstoff mit einem bestimmten minimalen Volumenanteil sowie einen Photoinitiator enthält. Durch schichtweises selektives Aushärten der metallgefüllten Harzformulierung wird mittels Lichtbestrahlung ein Bauteil additiv gefertigt. Die Erfindung befasst sich insbesondere mit der hochpräzisen Fertigung von strahlungsabsorbierenden Bauteilen auf der Basis lithographischer additiver Verfahren wie SLA, wobei aufgrund der besonderen Wahl der verwendeten Formulierung Wandstärken bis unter 100 µm bei dennoch großer Strahlenhärte und hoher Oberflächengüte erreichbar sind.

## Beschreibung

### GEBIET DER ERFINDUNG

Die vorliegende Erfindung betrifft eine metallgefüllte Harzformulierung, insbesondere für ein 3D-Druckverfahren, sowie ein 3D-Druckverfahren, in welchem eine derartige metallgefüllte Harzformulierung zur Fertigung eines Bauteils verwendet wird. Darüber hinaus betrifft die Erfindung ein Bauteil, welches insbesondere mit einem solchen 3D-Druckverfahren gefertigt ist. Die Erfindung befasst sich dabei insbesondere mit der additiven Fertigung von dreidimensional geformten Bauteilen zur Absorption elektromagnetischer Strahlung, z.B. Röntgenstrahlung.

### TECHNISCHER HINTERGRUND

In einigen technologischen Anwendungsbereichen kommen verstärkt strahlenabsorbierende Werkstoffe und daraus gefertigte Bauteile in verschiedensten, teils komplexen, Geometrien zum Einsatz. Das früher standardmäßig für solche Anwendungen verwendete Blei wurde hier sukzessive durch andere Metalle und Polymer/Metall-Komposite ersetzt. Im Falle von Polymer/Metall-Kompositen wird heutzutage häufig ein Metallfüllstoff mit hoher Dichte bzw. hoher Ordnungszahl (z.B. Wolfram) in eine Thermoplast-Matrix (z.B. Polyamide) eingebettet. Dieser Werkstoff wird typischerweise mittels konventioneller Polymerformgebungsverfahren, wie etwa Spritzguss oder Extrusion, zu industriellen Bauteilen verarbeitet (vgl. beispielsweise DE 10 2004 027158 A1, US 2008/0023636 A1, DE 10 2007 028231 A1 und WO 2012/034879 A1).

Durch einen höheren Anteil an Metallfüllstoff kann zwar eine höhere Dichte und damit bessere Bauteilperformance hinsichtlich Strahlenabsorption erreicht werden, jedoch sind ggf. Abstriche bei der resultierenden mechanischen Festigkeit hinzunehmen, was die Verarbeitung derartiger Materialien erschweren kann. Grundsätzlich sind komplexe Geometrien mit den erwähnten herkömmlichen Ansätzen nur unter hohem Aufwand, wenn überhaupt, realisierbar. Durch voranschreitende Miniaturisierung bzw. Weiterentwicklung von Anwendungslösungen besteht allerdings großer Bedarf zur Herstellung hochkomplexer Geometrien mit geringen Wandstärken und hoher Präzision, angesichts derer konventionelle Formgebungsverfahren zunehmend an ihre Grenzen stoßen.

Bei generativen bzw. additiven Fertigungsverfahren, auch allgemein als "3D-Druckverfahren" bezeichnet, werden ausgehend von einem digitalisierten geometrischen Modell eines Objekts ein oder mehrere Ausgangsmaterialien sequenziell in Lagen geschichtet und ausgehärtet. So wird beispielsweise bei der Stereolithografie (Englisch: "stereolithography", SL oder SLA) ein Bauteil schichtweise aus einer lichthärtbaren Harzformulierung wie beispielsweise Acryl-, Epoxid- oder Vinylesterharz aufgebaut. Hierzu wird die jeweilige Harzformulierung in einem Bad in flüssiger Form (Viskositäten typischerweise im Bereich < 2 Pa s) bereitgestellt und an der Oberfläche in ausgewählten Bereichen mittels Laserbestrahlung durch Polymerisation, sogenannte Photopolymerisation, zu einem Werkstoff (z.B. Kunststoff oder Komposit) ausgehärtet. Nach jedem Schritt wird die solchermaßen gebildete dünne Werkstoffschicht einige Millimeter in die Flüssigkeit abgesenkt und auf eine Position zurückgefahren, die um den Betrag einer Schichtstärke unter der vorherigen liegt. Die flüssige Harzformulierung über dem Werkstück wird anschließend durch einen Wischer bzw. eine Rakel gleichmäßig verteilt. Danach fährt der Laser erneut über die Flüssigkeitsoberfläche, sodass Schritt für Schritt ein dreidimensionales Bauteil entsteht.

3D-Drucken bietet außergewöhnliche Designfreiheit und erlaubt es unter anderem Objekte mit überschaubarem Aufwand herzustellen, welche mit herkömmlichen Methoden nicht oder nur unter erheblichem Aufwand herstellbar wären. Aus diesem Grund sind 3D-Druckverfahren derzeit weit verbreitet im Industriedesign, in der Medizintechnik, der Automobilindustrie, der Luft- und Raumfahrtindustrie oder generell in der industriellen Produktentwicklung, in der eine ressourceneffiziente Prozesskette zur bedarfsgerechten Klein- und Großserienfertigung individualisierter Bauteile eingesetzt wird bzw. auch für die flexible und On-Demand-Produktion von benötigten Ersatzteilen.

Beispielsweise beschreibt A. T. Sidambe et al., "Laser powder bed fusion of a pure tungsten ultra-fine single pinhole collimator for use in gammay ray detector characterisation," International Journal of Refractory Metals and Hard Materials, Volume 84, 2019, die Verwendung eines additiven Strahlschmelzverfahrens zur Fertigung einer dünnen Kollimator-Struktur aus Wolfram.

Bestimmte additive Fertigungstechnologien wie beispielsweise SLA, LCD (Liquid Crystal Display) Verfahren, Digital Light Processing (DLP) oder andere lichtgebende Verfahren mit aktiver Lichtmaske oder Kombinationen daraus zeichnen sich durch herausragend hohe Präzision aus und bieten damit einen besonders vielversprechenden Schlüssel zur Fertigung von ultrafeinen Formteilen.

So beschreibt beispielsweise die Druckschrift US 2020/0077966 A1 ein zweistufiges Verfahren zur Fertigung eines Kollimators aus Wolfram, bei welchem nach einem SLA-Schritt eine Schicht eines strahlenabsorbierenden Metalls mittels Kathodensputtern auf die polymerisierte Schicht aufgebracht wird. Diese Metallschicht wird im Anschluss von der SLA-Schicht abgehoben und als Schichtteil des Kollimators erhalten. Der Vorgang wird als Schichtverfahren entsprechend wiederholt, um den finalen Kollimator aus Wolfram zu fertigen. Die direkte Fertigung eines Kollimators aus einem strahlenabsorbierenden Werkstoff mittels SLA würde jedoch eine wesentlich vereinfachte und wirtschaftlichere Prozesslösung darstellen.

### ZUSAMMENFASSUNG DER ERFINDUNG

Vor diesem Hintergrund liegt der vorliegenden Erfindung die Aufgabe zugrunde, präzise und dennoch praktikable Lösungen zur Fertigung von strahlenabsorbierenden Bauteilen zu finden, mit denen vorzugsweise auch komplexe dünnwandige Strukturen kosteneffizient fertigbar sind.

Erfindungsgemäß wird diese Aufgabe durch eine metallgefüllte Harzformulierung mit den Merkmalen des Patentanspruchs 1, durch ein 3D-Druckverfahren mit den Merkmalen des Patentanspruchs 10 und durch ein additiv gefertigtes Bauteil mit den Merkmalen des Patentanspruchs 12 gelöst.

Demgemäß ist vorgesehen:
- Eine metallgefüllte Harzformulierung, insbesondere für ein 3D-Druckverfahren, auf der Basis von schichtweiser Photopolymerisation zur Fertigung eines, bevorzugt strahlenabsorbierenden, Bauteils, wobei die Harzformulierung enthält: eine photopolymerisierbare Matrixkomponente, welche zumindest eines von Monomeren, Oligomeren und Prepolymeren aus der Gruppe aus einfach und/oder mehrfach funktionellen radikalisch und/oder kationisch polymerisierbaren Verbindungen aufweist, einen metallischen Füllstoff, welcher eine Dichte von mindestens 8,5 g cm⁻³ aufweist, bevorzugt mindestens 10 g cm⁻³, wobei die photopolymerisierbare Matrixkomponente einen Volumenanteil von 5 - 80 Vol%, bevorzugt 5 - 70 Vol%, besonders bevorzugt 5 - 60 Vol%, bezogen auf eine Summe aus der photopolymerisierbaren Matrixkomponente und dem metallischen Füllstoff aufweist, und wobei der metallische Füllstoff einen Volumenanteil von 20 - 95 Vol%, bevorzugt 30 - 95 Vol%, besonders bevorzugt 40 - 95 Vol%, bezogen auf eine Summe aus der photopolymerisierbaren Matrixkomponente und dem metallischen Füllstoff aufweist, und einen Photoinitiator, welcher auf die photopolymerisierbare Matrixkomponente und die zur Photopolymerisation verwendete Lichtwellenlänge abgestimmt ist, wobei der Photoinitiator einen Gehalt von 0,05 - 10 phr, bevorzugt 0,1 - 5 phr, besonders bevorzugt 0,3 - 3 phr, bezogen auf die photopolymerisierbare Matrixkomponente aufweist.
- Ein 3D-Druckverfahren auf der Basis von schichtweiser Photopolymerisation zur Fertigung eines, insbesondere strahlenabsorbierenden, Bauteils unter Verwendung einer erfindungsgemäßen metallgefüllten Harzformulierung, wobei das 3D-Druckverfahren umfasst: Bereitstellen der metallgefüllten Harzformulierung in einem Fertigungsbad, auf einem Fertigungsbett und/oder als Nassschicht und schichtweises selektives Aushärten der metallgefüllten Harzformulierung durch Polymerisation in dem Fertigungsbad, auf dem Fertigungsbett und/oder in der Nassschicht mittels selektiver Lichtbestrahlung zur Bildung des Bauteils.
- Ein additiv gefertigtes Bauteil, insbesondere strahlenabsorbierend, welches mit einem erfindungsgemäßen 3D-Druckverfahren gefertigt ist.

Eine der vorliegenden Erfindung zugrunde liegende Idee besteht darin, einen hochdichten Metallwerkstoff in eine lichthärtbare Harzformulierung einzuarbeiten und diesen Verbundwerkstoff mit Hilfe eines lichtbasierten und damit besonders präzisen additiven Verfahrens in eine praktisch beliebig komplexe Bauteilform zu binden. Hierzu verwendet die vorliegende Erfindung eine metallgefüllte Harzformulierung, welche polymerisierbare Matrixkomponenten mit einem oder mehreren metallischen Füllwerkstoffen vereint. Ein Photoinitiator initiiert dabei eine schnelle Photoreaktion und verleiht dem Verbundmaterial damit in Kombination mit der Matrixkomponente genügend Grünfestigkeit, damit dieses während des 3D-Druckverfahrens und im Post-Processing die gewünschte Formtreue erhält. Die Lichtbestrahlung kann dabei optional direkt an die Oberfläche der Harzformulierung appliziert werden, oder durch ein für die Lichtbestrahlung durchlässiges Trägermedium in die Harzformulierung eingebracht werden.

Neben der Gewährleistung ultrafeiner und komplexer Geometrien mit Wand- bzw. Strukturstärken in der Größenordnung um 100 µm bei gleichzeitig hoher Auflösung von bis zu 10 µm sowie Präzision des 3D-Bauteils im Druckverfahren mit entsprechender Oberflächengüte ist das ausgehärtete Verbundmaterial insbesondere in der Lage, relevante Strahlungsdosen mit Energien im keV Bereich oder darüber hinaus bei den genannten Wandstärken zu absorbieren. Dies wird durch die Verwendung von strahlenabsorbierenden Metallen erreicht, welche bevorzugt eine Dichte ähnlich oder größer als Blei besitzen und einen Füllstoffgehalt von mindestens 20 Vol% im Verbund erreichen. Die resultierende Dichte des photopolymerisierten Kompositwerkstoffes kann damit ebenfalls ausreichend groß eingestellt werden, z.B. im Bereich > 4,5 g cm-³.

Konsequenterweise kann damit auch die Effektivität und Leistungsfähigkeit derartig hergestellter technischer 3D-Bauteile entscheidend verbessert werden, z.B. verbesserte Richtungsgebung des Lichtes in einem Strahlungskollimator. Die Möglichkeit rasch und effizient Serien- und Ersatzteile für neue und bestehende Anwendungslösungen zur Verfügung zu stellen ist ein weiterer wesentlicher Vorteil von den verwendeten 3D-Drucktechnologien. Lichtbasierte Technologien sind hier besonders vorteilhaft, da sie durch Ihre Präzision die Herstellung von Bauteilen mit gleichbleibender Oberflächenqualität verglichen zu konventionellen Fertigungsmethoden wie Spritzguss ermöglichen. Dadurch ergibt sich auch die gewünschte Abwärtskompatibilität für eine wirtschaftliche On-Demand-Fertigung von Ersatzteilen in bestehenden Anwendungsbereichen.

Derzeit bestehende Materiallösungen, welche über konventionelle Fertigung herstellbar sind und aus einem metallgefüllten Verbundmaterial mit den gewünschten strahlungsabsorbierenden Eigenschaften bestehen, basieren auf einer Thermoplastmatrix. Damit sind jedoch die einsetzbaren, additiven Verarbeitungsmethoden limitiert auf extrusionsbasierte 3D-Druckverfahren (z.B. Fused Filament Fabrication) oder Pulverbettverfahren (z.B. Laser Powder Bed Fusion), die bezüglich ihrer erreichbaren Auflösung bzw. Feature-Größe (erzielbare Bauteilauflösung größer als 50 µm, minimale Wandstärken größer als 150 µm) deutlich unter den Möglichkeiten von lichtbasierten 3D-Drucktechnologien liegen. Vor allem wenn Kompositwerkstoffe zum Einsatz kommen werden diese Limitationen noch signifikanter.

Ein weiterer Vorteil der Herstellung von Verbundmaterialien via SLA-basierten Technologien ist der effiziente Materialverbrauch, da sämtliche Formulierung, die nicht polymerisiert wird, im Druckprozess wiederverwendet werden kann.

Der digitale Fertigungsaspekt von lichtbasierten 3D-Druckverfahren ermöglicht vor allem eine werkzeuglose Fertigung der Zielgeometrie. Dadurch wird das Produktionsrisiko neuer Geometrien um ein Vielfaches herabgesetzt, da keine Anlaufkosten für eine neue Produktionskampagne vorzufinanzieren sind und keine Wartezeiten für die Werkzeugfertigung eingetaktet werden müssen. Ohne dieses Produktionsrisiko können Geometrie- und Produktiterationen rasch und kostengünstig in den Feldtest überführt und die Produktoptimierung demzufolge permanent vorangetrieben werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Weiterbildung kann die photopolymerisierbare Matrixkomponente Acrylat, insbesondere Methacrylat, Acrylamid, insbesondere Methacrylamid, Vinylester, Vinylether und/oder cyclische Ether oder dergleichen umfassen.

Prinzipiell kommt hier jedoch jede lichtaushärtende Matrixkomponente oder sich entsprechend verhaltendes Material in Frage, welches sich unter Lichtbestrahlung und insbesondere unter Anwesenheit geeigneter Photoinitiatorsysteme durch photochemische Prozesse strukturell vernetzt und aushärtet.

Gemäß einer Weiterbildung kann die photopolymerisierbare Matrixkomponente zur Aushärtung unter Bestrahlung mit Licht einer Wellenlänge von 150 - 1000 nm, bevorzugt 200 - 550 nm, angepasst sein.

Damit kann die photopolymerisierbare Matrixkomponente neben nahinfrarotem und sichtbarem Licht auch insbesondere mit UV-Licht aushärtbar sein. Der oder die Photoinitiatoren sind entsprechend auf diese Wellenlängen abzustimmen. Erzielbare Durchhärtungstiefen und die hierdurch definierten Schichtdicken des additiven Aufbaus können beispielsweise im Bereich von 10-500 µm, bevorzugt 40-300 µm, besonders bevorzugt 70-250 µm liegen.

Gemäß einer Weiterbildung kann der metallische Füllstoff Wolfram, Molybdän und/oder Tantal oder ein anderes geeignetes Metall umfassen.

Prinzipiell kommt hier jedes Metall, jedes metallische Material und/oder jede metallische Materialkombination in Frage, welche(s) eine geeignete Dichte von mindestens 8,5 g cm⁻³, bevorzugt mindestens 10 g cm⁻³, besonders bevorzugt vergleichbar oder größer als die von Blei aufweist.

Gemäß einer Weiterbildung kann die entsprechende Harzformulierung eine Dichte von mindestens 4,5 g cm⁻³, bevorzugt mindestens 6 g cm⁻³, besonders bevorzugt mindestens 8 g cm⁻³, aufweisen.

Gemäß einer Weiterbildung kann der metallische Füllstoff einen Partikelfeinanteil von weniger als 10% mit einer Partikelgröße kleiner als einem Mikrometer umfassen.

Die starke Absorptionswirkung der eingesetzten Metallfüllstoffe, besonders im Spektralbereich von 150-1000 nm, kann die erreichbare aushärtbare Schichtstärke limitieren. Diese Limitierung ist stark vom Füllstoffgrad und von der Partikelgröße, -form und -verteilung abhängig. Je höher der Füllstoffgrad und/oder geringer die Partikelgröße, desto stärker die Hinderung, dass Licht in die Formulierung eindringt und die Polymerisation und damit Strukturierung der photopolymerisierbaren Matrixkomponente ermöglicht. Aus diesem Grund wird in der vorliegenden Weiterbildung der Partikelfeinanteil vorteilhaft klein gehalten.

Gemäß einer Weiterbildung kann der metallische Füllstoff eine Partikelgrößenverteilung mit D10 > 2 µm und D90 < 100 µm aufweisen.

Neben der durchschnittlichen Partikelgröße ist auch die Partikelgrößenverteilung von Bedeutung. Die Partikelgrößenverteilung einer Probe kann beispielsweise mittels Laserbeugung vermessen und anhand unterschiedlicher Kennzahlen Dxx charakterisiert werden. D50 bedeutet beispielsweise, dass 50% der Partikel kleiner sind als der angegebene Wert. Weitere wichtige Parameter umfassen D10 als Maß für die kleinsten Partikel sowie D90 und ggf. D95, D99 und/oder D100 für die größeren Partikel in der Probe. Je näher beispielsweise D10 und D90 zusammenliegen, desto schmaler ist die Partikelgrö-ßenverteilung.

Vorliegend sollte die Partikelgröße der kleinsten Partikel somit im Wesentlichen mehr als 2 µm betragen (Kennzahl D10).

Die obere Partikelgrößengrenze D90 wird durch die angestrebte Wandstärke und die erforderliche Oberflächenrauheit definiert (z.B. kleiner als 100 µm).

Gemäß einer Weiterbildung kann der metallische Füllstoff neben einer monomodalen auch eine bi- bzw. multimodale Partikelgrößenverteilung aufweisen.

Partikelgrößenverteilungen mit mehreren Maximalwerten in der Dichteverteilung werden als multimodal bezeichnet, d.h. bimodal, trimodal usw. Multimodale Verteilungen sind bevorzugt, wenn hohe Füllgrade erreicht werden sollen bzw. erleichtern die Verarbeitbarkeit der metallgefüllten Harzformulierung. Die Dichteverteilung der metallischen Füllpartikel erreicht somit vorliegend entweder nur ein einzelnes oder bestenfalls zwei oder mehrere Maxima.

Gemäß einer Weiterbildung kann der metallische Füllstoff abgerundete und/oder runde Partikel aufweisen.

Beispielsweise führen abgerundete und/oder runde Metallpartikel in der erfindungsgemäßen Harzformulierung zu einer Erhöhung der Fließfähigkeit bzw. Reduktion des Abriebverhaltens im Prozess, was sich vorteilhaft auf die Verarbeitung der Harzformulierung auswirkt.

Gemäß einer Weiterbildung kann die metallgefüllte Harzformulierung weiterhin ein Rheologie-Additiv, einen Nanopartikel-Füllstoff mit Partikelgrößen kleiner als einem Mikrometer, einen Lichtabsorber, einen Haftvermittler, einen Entschäumer, ein Verlaufsadditiv und/oder einen thermischen Initiator enthalten. Insbesondere kann das jeweilige Additiv zu einem Gehalt von 0,01 - 20 phr bezogen auf die photopolymerisierbare Matrixkomponente vorhanden sein.

Beispielsweise können die Metallpartikel des metallischen Füllstoffs mittels Zugabe von Rheologieadditiven in der Matrixkomponente stabilisiert werden, indem die Rheologieadditive durch die Ausbildung eines Netzes physikalischer Bindungen das Absinken der Partikel innerhalb der Matrixkomponente verhindern.

Alternativ oder zusätzlich können Nanopartikel zugefügt werden, um ein Absinken zu vermeiden.

Die verwendeten metallgefüllten Harzformulierungen weisen bevorzugt eine entsprechende Sedimentationsstabilität auf (z.B. mehr als vier Wochen bei Rautemperatur und/oder mehr als zwei Tage bei Prozesstemperatur), um die Lagerstabilität des Harzproduktes und im Weiteren eine isotrope Füllstoffverteilung in den Schichten des gefertigten Bauteiles während des 3D-Druckprozesses zu gewährleisten.

Sollte Lichtstreuung während des 3D-Druckprozesses an den Partikeln stattfinden, so kann durch die Zugabe von lichtabsorbierenden Stoffen (z.B. UV-Absorber, HALS) die Aushärtung außerhalb des gewünschten belichteten Bereichs verhindert werden.

Darüber hinaus können weitere Stoffe oder Stoffgemische hinzugefügt werden, um die Aushärtung zu begünstigen (z.B. UVhärtende Haftvermittler, Entschäumer zur Verringerung des Luftporengehalts, Verlaufsadditive für eine stabile Harzschicht im Fertigungsbett usw.).

Gemäß einer Weiterbildung kann das 3D-Druckverfahren eine aktive Lichtmaske aus den Verfahrenstypen SLA (z.B. Laser), LCD-Verfahren (z.B. Display), DLP (z.B. Projektor) und/oder andere geeignete lichtgebende Verfahren mit aktiver Lichtmaske umfassen. Es versteht sich hierbei, dass der Fachmann entsprechende Verfahren dabei kombinieren kann.

Die mit Abstand präzisesten additiven Fertigungsverfahren sind lichtbasierte Technologien wie Stereolithografie (SLA) oder Digital Light Processing (DLP), wobei hier sogenannte photopolymerisierbare Harzformulierungen (zumeist auf Acrylat- oder Epoxidbasis) zum Einsatz kommen. Mittels dieser Technologien können die eingesetzten Harzformulierungen schichtweise durch Lichtanregung lokal und präzise ausgehärtet werden, was die Fertigung von 3D-Bauteilen mit einer Auflösung bis zu 10 µm (bei SLA) und Bauteilmerkmalen bis zu < 100 µm ermöglicht. Darüber hinaus sind solche 3D-Druckverfahren vorteilhaft gegenüber Materialextrusions- oder Pulverbettverfahren aufgrund ihrer hohen Materialeffizienz, ihrem reduzierten Energieverbrauch, erreichbaren Bauteildichte und ihrer ausgezeichneten Skalierbarkeit.

So kann beispielsweise die sogenannte Hot Lithography zur Anwendung kommen, eine Spezialform der SLA, vgl. beispielsweise die Druckschrift WO 2018/032022 A1, welche die Verarbeitung von hochgefüllten Formulierungen durch gezielte Beheizung von Prozesszonen in Kombination mit einer Schichtrakeltechnik vorsieht, wodurch im Ergebnis unter anderem eine ausgezeichnete Materialbeständigkeit und zugleich eine glatte Oberfläche erreicht wird. Insbesondere eignet sich die Hot Lithography somit zur Verarbeitung gefüllter Materialsysteme, wie etwa erfindungsgemäße metallgefüllte Harzformulierungen, und damit zur Herstellung von technischen 3D-Bauteilen aus Kompositwerkstoffen mit hoher Präzision und Oberflächengüte.

Gemäß einer Weiterbildung kann das Bauteil dazu ausgebildet sein, elektromagnetische Strahlung mit einer Energie von mindestens 1 keV, insbesondere mindestens 50 keV, zu absorbieren.

Beispielsweise kann das Bauteil dazu ausgebildet sein, elektromagnetische Strahlung mit Energien im Bereich von 50 keV bis etwa 300 keV zu absorbieren. Wandstärken können entsprechend beispielsweise im Bereich von 100 ± 50 µm und höher gewählt sein je nach Strahlungsenergie.

Gemäß einer Weiterbildung kann das Bauteil Wandstärken von weniger als 150 µm aufweisen.

Die minimalen Wandstärken können somit insbesondere bis unter 100 µm betragen.

Gemäß einer Weiterbildung kann das Bauteil eine Dichte von mindestens 4,5 g cm⁻³, bevorzugt mindestens 6 g cm⁻³, besonders bevorzugt mindestens 8 g cm⁻³, aufweisen.

Die resultierende Dichte des photopolymerisierten Kompositwerkstoffes kann somit im Bereich von Blei oder sogar darüber liegen.

Gemäß einer Weiterbildung kann aus dem Bauteil (Grünteil) in einem weiteren Prozessschritt der organische Bestandteil mittels thermischer Verfahren (z.B.: Konvektionsofen) ausgebrannt werden und ein dadurch entstehender Braunteil einem Sinterverfahren zugeführt werden, wodurch ein metallisches, metalloxidisches bzw. eine Kombination aus metallischem und metalloxidischem Formteil entsteht.

Gemäß einer Weiterbildung kann das ausgebrannte Bauteil auch mit einer metallischen und/oder nichtmetallischen Matrix infiltriert werden, wodurch die Eigenschaften (z.B. Strahlenabsorption, Festigkeit etc.) eingestellt werden können.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Ansicht einer 3D-Druckvorrichtung zur Durchführung eines 3D-Druckverfahrens gemäß einer Ausführungsform der Erfindung;
- Fig. 2: eine Detailansicht eines Bauteils, welches mit der 3D-Druckvorrichtung aus Fig. 1 auf Basis einer metallgefüllten Harzformulierung gemäß einer Ausführungsform der Erfindung gefertigt wird; und
- Fig. 3: ein schematisches Ablaufdiagramm des in Fig. 1 und 2 verwendeten 3D-Druckverfahrens.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

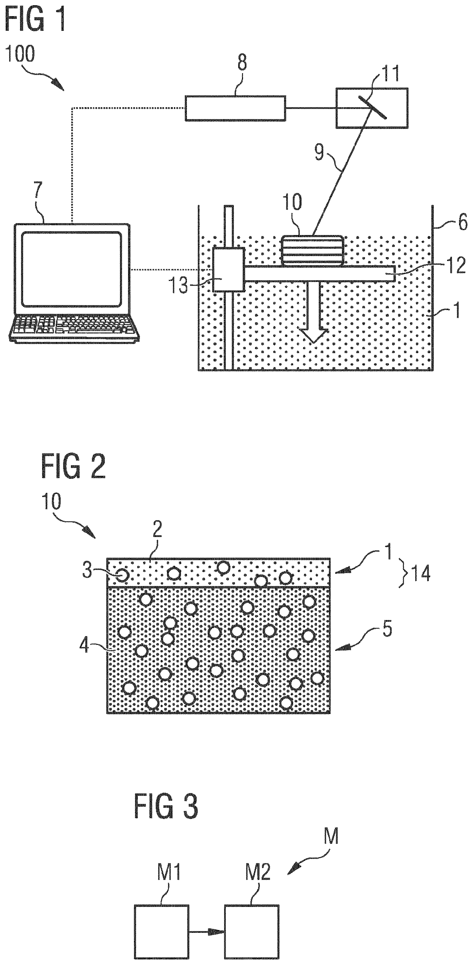

Figur 1 zeigt eine schematische Ansicht einer 3D-Druckvorrichtung 100 zur Durchführung eines 3D-Druckverfahrens M gemäß einer Ausführungsform der Erfindung. Ein schematisches Ablaufdiagramm des Verfahrens M ist in Fig. 3 dargestellt.

Das Verfahren M wird in der im Folgenden geschilderten Ausführungsform für die Fertigung eines strahlenabsorbierenden Bauteils 10 verwendet. Bei dem Bauteil 10 kann es sich beispielsweise um einen Streustrahlungskollimator handeln, welcher zur Unterdrückung von unerwünschter Streustrahlung für Strahlungsdetektoren bei Transmissions-Tomographieeinrichtungen, wie z.B. Röntgen-Computertomographen, verwendet wird. Bei Untersuchungen, z.B. bei der Röntgen-Computertomographie, kann derartige Streustrahlung durch Wechselwirkung mit Objekten entstehen. Um unerwünschte Artefakte in den aufgenommenen Bildern zu verhindern, wird diese Streustrahlung üblicherweise durch entsprechende Kollimatorelemente aus einem geeignet dichten Metall- oder Metallkompositmaterial vor dem Eintritt in den Detektor abgefangen.

Für derartige und andere strahlenabsorbierende Strukturen werden heutzutage häufig Polymer/Metall-Komposite mittels konventioneller Polymerformgebungsverfahren, wie etwa Spritzguss oder Extrusion, geformt, wobei ein Metallfüllstoff mit hoher Dichte und/oder hoher Ordnungszahl verwendet wird, wie beispielsweise Wolfram. Die Dichte des resultierenden Komposites beträgt dabei zumindest 4,5 g cm⁻³, was einem Wolfram-Füllgrad von > 18,5 Vol% entspricht, idealer sind jedoch höhere Füllgrade, um eine Dichte ähnlich oder größer als Blei zu erreichen. Es gilt zu beachten, dass mit höherer Dichte zwar die Bauteilperformance hinsichtlich Strahlenabsorption verbessert wird, jedoch Abstriche bei der mechanischen Festigkeit des Kompositwerkstoffes berücksichtigt werden müssen, was zu Sprödigkeit in den finalen Bauteilen führen kann. Des Weiteren wird die Verarbeitung solcher Kompositwerkstoffe mit höherem Anteil an Metallfüllstoff erschwert und komplexe Geometrien können nicht mehr realisiert werden. Die Polymermatrix muss somit gezielt optimiert sein, um gute Verarbeitbarkeit und die geforderten (thermo)mechanischen Eigenschaften zu gewährleisten.

Durch voranschreitende Miniaturisierung bzw. Weiterentwicklung von Anwendungslösungen besteht weiterhin großer Bedarf zur Herstellung hochkomplexer Geometrien (Wandstärken bis zu < 100 µm und Auflösung bzw. Präzision bis zu 10 µm, um die Sensitivität beispielsweise eines Kollimators zu erhöhen), die mittels konventioneller Formgebungsverfahren nicht realisierbar sind. Des Weiteren ist mit den genannten Serienproduktionslösungen die On-Demand-Fertigung von abwärtskompatiblen Ersatzteilen nicht ökonomisch realisierbar bzw. muss dies zum heutigen Stand durch ausreichende Lagerkapazitäten abgefedert werden.

Vorliegend wird deshalb vorgeschlagen, additive Fertigungstechnologien, d.h. 3D-Druck, zur Fertigung solcher präzisen, strahlenabsorbierenden Formteile zu verwenden. Bisher realisierte 3D-Druckverfahren, welche direkt metallische Werkstoffe verarbeiten (z.B. Laser Powder Bed Fusion, vgl. die in der Einleitung erwähnte Druckschrift von A. T. Sidambe et al.) oder welche vergleichbar zum Spritzguss oder zu Extrusionsverfahren mit thermoplastbasierten Metallkompositen arbeiten (z.B. Fused Filament Fabrication, vgl. z.B. US 2020/0024394 A1), sind jedoch stark limitiert hinsichtlich der erzielbaren Bauteilauflösung (> 50 µm) und den minimal erreichbaren Wandstärken (> 150 µm). Vor allem wenn Kompositwerkstoffe zum Einsatz kommen werden diese Limitationen noch signifikanter.

Aus diesem Grund wird vorliegend der neuartige Ansatz verfolgt, eine metallgefüllte Harzformulierung über ein stereolithographisches 3D-Druckverfahren wie SLA mit hoher Präzision, bis zu < 100 µm in Bauteilmerkmalen bzw. Auflösung bis zu 10 µm, schichtweise durch Lichtanregung lokal und präzise freiform zu strukturieren. Die metallgefüllte Harzformulierung ist dabei derart gewählt, dass das finale Bauteil 10 eine Materialdichte von mindestens 4,5 g cm⁻³ oder mehr für die Absorption von Strahlung mit Energien beispielsweise über 50 keV aufweist. Der Zugang zu komplexen Geometrien und geringen Wandstärken ermöglicht verbesserte Part-Performance in vielen Anwendungsbereichen (z. B. verbesserte Richtungsgebung des Lichtes in einem Kollimator). Darüber hinaus sind solche 3D-Druckverfahren vorteilhaft gegenüber Materialextrusions- oder Pulverbettverfahren aufgrund ihrer hohen Materialeffizienz, ihrem reduzierten Energieverbrauch, erreichbaren Bauteildichte und ihrer Skalierbarkeit.

Das Verfahren M umfasst entsprechend unter M1 Bereitstellen der metallgefüllten Harzformulierung 1 in einem Fertigungsbad und/oder auf einem Fertigungsbett 6 und/oder allgemein durch Bereitstellung einer Nassschicht einer metallgefüllten Harzformulierung 1. Das Verfahren M umfasst ferner unter M2 schichtweises selektives Aushärten der metallgefüllten Harzformulierung 1 durch Photopolymerisation in dem Fertigungsbad und/oder auf dem Fertigungsbett 6 und/oder in der bereitgestellten Nassschicht mittels selektiver Lichtbestrahlung zur Bildung des Bauteils. Die Lichtbestrahlung kann optional direkt an die Oberfläche der Harzformulierung appliziert werden (Fig. 1), oder durch ein für die Lichtbestrahlung durchlässiges Trägermedium in die Harzformulierung eingebracht werden.

Der entsprechende beispielhafte Aufbau für ein "top down" Verfahren ist in Fig. 1 dargestellt. Die metallgefüllte Harzformulierung 1 befindet sich in einem Fertigungsbad 6. Eine Steuereinrichtung 7, z.B. ein Computer, steuert einerseits einen Laser 8, welcher einen Laserstrahl 9 über einen Umlenkspiegel 11 selektiv über eine Oberfläche der Harzformulierung 1 in dem Fertigungsbad 6 fahren lässt. Andererseits steuert die Steuereinrichtung 7 eine Absenkeinrichtung 13 innerhalb des Fertigungsbads 6, um eine Werkplattform 12 schrittweise abzusenken, auf welcher das Bauteil 10 schichtweise durch eine mit der Laserstrahlung hervorgerufene Aushärtung der Harzformulierung 1 aufgebaut wird.

Die verwendete Formulierung 1 umfasst dabei eine Mischung einer photostrukturierbaren Matrixkomponente (Komponente A) und einem oder mehreren metallischen Füllstoffen (Komponente B). Die Formulierung 1 setzt sich dabei wie folgt zusammen:
- Photopolymerisierbare Matrixkomponente A: Monomer, Oligomer, Prepolymer oder Mischung dieser aus der Gruppe von einfach und/oder mehrfachfunktionellen radikalisch und/oder kationisch polymerisierbaren Verbindungen, wie z. B. (Meth)acrylate, (Meth)acrylamide, Vinylester, Vinylether, cyclische Ether und dergleichen mit einem Volumenanteil von 5 - 80 Vol%, bevorzugt 5 - 70 Vol%, besonders bevorzugt 5 - 60 Vol%, bezogen auf die Summe aus Komponente A und B.
- metallischer Füllstoff, insbesondere strahlenabsorbierend, z.B. ein Refraktärmetall (Komponente B): Dichte ≥ 8,5 g cm⁻³, bevorzugt mindestens 10 g cm⁻³, und Volumenanteil von 20 - 95 Vol%, bevorzugt 30 - 95 Vol%, besonders bevorzugt 40 - 95 Vol%, bezogen auf die Summe aus Komponente A und B, bevorzugt Wolfram, Molybdän oder Tantal, bevorzugt mit geringem Partikelfeinanteil (weniger als 10% < 1 µm), einem D10 > 2 µm und einem D90 < 100 µm, bevorzugt monomodale oder bimodale Verteilung, bevorzugt abgerundete oder runde Partikelform.
- Photoinitiator: Abgestimmt auf die photopolymerisierbare Komponente A und die zur Aushärtung verwendete Wellenlänge des Lichtes mit einem Gehalt von 0,05-10 phr, bevorzugt 0,1 - 5 phr, besonders bevorzugt 0,3 - 3 phr, bezogen auf Komponente A.

Die photopolymerisierbare Komponente A wird mit Hilfe von abgestimmten Photoinitatoren durch gezielte Bestrahlung mittels Lichts einer Wellenlänge von 150-1000 nm, bevorzugt 200-550 nm, ausgehärtet. Die erzielbaren Durchhärtungstiefen und damit die Schichtdicken liegen damit im Bereich von 10-500 µm, bevorzugt 40-300 µm, besonders bevorzugt 70-250 µm. Die Matrixkomponente A zusammen mit dem Photoinitator ermöglichen eine schnelle Photoreaktion und verleihen dem Verbundmaterial genügend Grünfestigkeit, damit dieses während des 3D-Druckverfahrens und im Post-Processing die gewünschte Formtreue erhält.

Optional können weitere Komponenten in die Formulierung aufgenommen werden wie beispielsweise Rheologie-Additive, Füllstoffe mit Partikelgröße < 1 µm, Absorber, Haftvermittler, Entschäumer, Verlaufsadditive, thermische Initiatoren, jeweils zu einem Gehalt von 0,01-20 phr bezogen auf Komponente A.

Fig. 2 zeigt eine Detailansicht des Bauteils 10 aus Fig. 1 während der Fertigung.

In einem unteren Bereich des Bauteils 10 ist die metallgefüllte Harzformulierung 1 bereits in einen ausgehärteten Werkstoff 5 umgewandelt worden. Darauf befindet sich eine dünne Schicht einer durch die Position der Absenkeinrichtung 13 bestimmten Schichtdicke 14 der noch unausgehärteten metallgefüllten Harzformulierung 1, d.h. der photopolymerisierbaren Matrixkomponente 2 samt dem darin dispergierten metallischen Füllwerkstoff 3. Durch selektive Laserbestrahlung kann diese Schicht nun gezielt in bestimmten Bereichen ausgehärtet werden und das Bauteil 10 derart schichtweise nach oben hin erweitert werden.

Die dargestellte Harzformulierung und die mittels SLA gefertigten Photopolymerkomposite bieten mit den erzielten Materialeigenschaften (Dichte > 4,5 g cm⁻³ zur Strahlenabsorption im Bereich 50-300 keV bzw. ausreichende Strahlenbeständigkeit der Matrix), in Kombination mit der beschriebenen Geometriefreiheit der herstellbaren 3D-Bauteile (minimale Wandstärken bis zu < 100 µm), der erreichbaren Bauteilauflösung (bis zu 10 µm) und resultierenden Oberflächengüte eine entscheidende Qualitäts- und Leistungsverbesserung eines entsprechenden technischen 3D-Bauteils (z.B.: verbesserte Richtungsgebung des Lichtes in einem Strahlungskollimator).

Ein Nachweis der Harzformulierung kann beispielsweise über Partikelbestimmung (Dichte, REM, Partikelgrößenbestimmung, RFA), Matrixbestimmung via Fourier-Transformations-IR-Spektroskopie, NMR-Spektroskopie, GPC, LC/GC-MS, UV/VIS-Spektroskopie und/oder UV-Belichtungstest oder dergleichen erfolgen.

Ein entsprechend lithographisch hergestelltes Bauteil 10 kann beispielsweise über Mikroskopie des SLA-Schichtaufbaus sowie die verwendeten Partikelgrößen, -formen und/oder -verteilungen analysiert werden. Über die Partikelverteilung kann beispielsweise der ungefähre Füllstoffgehalt abgeschätzt werden. Energiedispersive Röntgenspektroskopie (EDS) kann beispielsweise zur Analyse des verwendeten Füllstoffes verwendet werden und über Dichtebestimmung und ATR-IR-Spektroskopie kann zum Beispiel die zugrundeliegende Matrix und der Füllstoffgehalt, unter Einbeziehungen der mittels EDS ermittelten Informationen, bestimmt werden. Eine zugehörige Strahlenabsorption kann relativ zu reinem Wolfram oder Blei gemessen werden, wobei eine definierte Strahlungsintensität auf Plättchen beaufschlagbar und durch Strahlendurchdringung messbar ist. Schlussendlich ist dabei die Absorption der Streustrahlung sowie mögliche Artefakte/Strahlung die vom Material ausgehen relevant, was in der jeweiligen Applikation getestet werden kann.

Anders ausgedrückt lässt sich das mit dem vorliegenden Verfahren M gefertigte Bauteil 10 von herkömmlich hergestellten Strukturen durch geeignete Messverfahren sowohl hinsichtlich seiner Materialzusammensetzung, als auch hinsichtlich seiner Strukturierung (Wandstärken etc.) unterscheiden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: metallgefüllte Harzformulierung
- 2: photopolymerisierbare Matrixkomponente
- 3: metallischer Füllstoff
- 4: photopolymerisierte Matrixkomponente
- 5: ausgehärteter Werkstoff
- 6: Fertigungsbad, Fertigungsbett
- 7: Steuereinrichtung
- 8: Laser
- 9: Laserstrahl
- 10: Bauteil
- 11: Umlenkspiegel
- 12: Werkplattform
- 13: Absenkeinrichtung
- 14: Schichtdicke
- 100: 3D-Druckvorrichtung

- M: Verfahren
- Ml, M2: Verfahrensschritte

## Patentansprüche

1. Metallgefüllte Harzformulierung (1), insbesondere für ein 3D-Druckverfahren (M), auf der Basis von Photopolymerisation zur Fertigung eines, insbesondere strahlenabsorbierenden, Bauteils (10), wobei die Harzformulierung (1) enthält:
eine photopolymerisierbare Matrixkomponente (2), welche zumindest eines von Monomeren, Oligomeren und Prepolymeren aus der Gruppe aus einfach und/oder mehrfach funktionellen radikalisch und/oder kationisch polymerisierbaren Verbindungen aufweist,
einen metallischen Füllstoff (3), welcher eine Dichte von mindestens 8,5 g cm⁻³ aufweist, bevorzugt mindestens 10 g cm⁻³, wobei die photopolymerisierbare Matrixkomponente (2) einen Volumenanteil von 5 - 80 Vol%, bevorzugt 5 - 70 Vol%, besonders bevorzugt 5 - 60 Vol%, bezogen auf eine Summe aus der photopolymerisierbaren Matrixkomponente (2) und dem metallischen Füllstoff (3) aufweist, und wobei der metallische Füllstoff (3) einen Volumenanteil von 20 - 95 Vol%, bevorzugt 30 - 95 Vol%, besonders bevorzugt 40 - 95 Vol%, bezogen auf eine Summe aus der photopolymerisierbaren Matrixkomponente (2) und dem metallischen Füllstoff (3) aufweist, und
einen Photoinitiator, welcher auf die photopolymerisierbare Matrixkomponente (2) und die zur Photopolymerisation verwendete Lichtwellenlänge abgestimmt ist, wobei der Photoinitiator einen Gehalt von 0,05 - 10 phr, bevorzugt 0,1 - 5 phr, besonders bevorzugt 0,3 - 3 phr, bezogen auf die photopolymerisierbare Matrixkomponente (2) aufweist.

2. Harzformulierung nach Anspruch 1,
**dadurch gekennzeichnet,**
**dass** die photopolymerisierbare Matrixkomponente (2) zumindest eines von Acrylat, insbesondere Methacrylat, Acrylamid, insbesondere Methacrylamid, Vinylester, Vinylether und cyclische Ether umfasst.

3. Harzformulierung nach zumindest einem der vorhergehenden Ansprüche,
**dadurch gekennzeichnet,**
**dass** die photopolymerisierbare Matrixkomponente (2) zur Aushärtung unter Bestrahlung mit Licht einer Wellenlänge von 150 - 1000 nm, bevorzugt 200 - 550 nm, angepasst ist.

4. Harzformulierung nach zumindest einem der vorhergehenden Ansprüche,
**dadurch gekennzeichnet,**
**dass** der metallische Füllstoff (3) zumindest eines von Wolfram, Molybdän und Tantal umfasst.

5. Harzformulierung nach zumindest einem der vorhergehenden Ansprüche,
**dadurch gekennzeichnet,**
**dass** der metallische Füllstoff (3) einen Partikelfeinanteil von weniger als 10% mit einer Partikelgröße kleiner als einem Mikrometer umfasst.

6. Harzformulierung nach zumindest einem der vorhergehenden Ansprüche,
**dadurch gekennzeichnet,**
**dass** der metallische Füllstoff (3) eine Partikelgrößenverteilung mit D10 > 2 µm und D90 < 100 µm aufweist.

7. Harzformulierung nach zumindest einem der vorhergehenden Ansprüche,
**dadurch gekennzeichnet,**
**dass** der metallische Füllstoff (3) eine monomodale oder bimodale Partikelgrößenverteilung aufweist.

8. Harzformulierung nach zumindest einem der vorhergehenden Ansprüche,
**dadurch gekennzeichnet,**
**dass** der metallische Füllstoff (3) abgerundete und/oder runde Partikel aufweist.

9. Harzformulierung nach zumindest einem der vorhergehenden Ansprüche,
**dadurch gekennzeichnet,**
**dass** die metallgefüllte Harzformulierung (1) weiterhin zumindest eines von einem Rheologie-Additiv, einem Nanopartikel-Füllstoff mit Partikelgrößen kleiner als einem Mikrometer, einem Lichtabsorber, einem Haftvermittler, einem Entschäumer, einem Verlaufsadditiv und einem thermischen Initiator enthält, insbesondere jeweils zu einem Gehalt von 0,01 - 20 phr bezogen auf die photopolymerisierbare Matrixkomponente (2).

10. 3D-Druckverfahren (M) auf der Basis von Photopolymerisation zur Fertigung eines, insbesondere strahlenabsorbierenden, Bauteils (10) unter Verwendung einer metallgefüllten Harzformulierung (1) nach einem der Ansprüche 1 bis 9, wobei das 3D-Druckverfahren (M) umfasst:
Bereitstellen (M1) der metallgefüllten Harzformulierung (1) in einem Fertigungsbad, auf einem Fertigungsbett (6) und/oder als Nassschicht, und
schichtweises selektives Aushärten (M2) der metallgefüllten Harzformulierung (1) durch Polymerisation in dem Fertigungsbad, auf dem Fertigungsbett (6) und/oder in der Nassschicht mittels selektiver Lichtbestrahlung zur Bildung des Bauteils (10) .

11. 3D-Druckverfahren nach Anspruch 10,
**dadurch gekennzeichnet,**
**dass** das 3D-Druckverfahren (M) zumindest eine aktive Lichtmaske aus den Verfahrenstypen Stereolithografie, Liquid-Crystal-Display-Verfahren und Digital Light Processing umfasst.

12. Additiv gefertigtes Bauteil (10), insbesondere strahlenabsorbierend, welches mit einem 3D-Druckverfahren (M) nach Anspruch 10 oder 11 gefertigt ist.

13. Bauteil nach Anspruch 12,
**dadurch gekennzeichnet,**
**dass** das Bauteil (10) dazu ausgebildet ist, elektromagnetische Strahlung mit einer Energie von mindestens 1 keV, insbesondere mindestens 50 keV, zu absorbieren.

14. Bauteil nach Anspruch 12 oder 13,
**dadurch gekennzeichnet,**
**dass** das Bauteil (10) Wandstärken von weniger als 150 µm aufweist.

15. Bauteil nach zumindest einem der Ansprüche 12 bis 14,
**dadurch gekennzeichnet,**
**dass** das Bauteil (10) eine Dichte von mindestens 4,5 g cm⁻³, bevorzugt mindestens 6 g cm⁻³, besonders bevorzugt mindestens 8 g cm⁻³, aufweist.
